# EUROPÄISCHE PATENTSCHRIFT

(11) **EP 3 245 076 B1**
(45) Veröffentlichungstag und Bekanntmachung des Hinweises auf die Patenterteilung: **23.12.2020**
(21) Anmeldenummer: 16700452.2
(22) Anmeldetag: 13.01.2016
(51) Int. Cl.: B44B 5/02, B32B 38/06, B32B 3/30, B44C 1/24, B44C 5/04

(54) **BAUELEMENT MIT DURCH PRÄGEN ERZEUGTER OBERFLÄCHENSTRUKTUR UND VERFAHREN ZU DESSEN HERSTELLUNG**
COMPONENT WITH SURFACE STRUCTURE GENERATED BY EMBOSSING AND METHOD FOR THE PRODUCTION THEREOF
ÉLÉMENT PRÉSENTANT UNE STRUCTURE SUPERFICIELLE OBTENUE PAR GAUFRAGE ET PROCÉDÉ POUR LA FABRICATION D'UN TEL ÉLÉMENT

(30) Priorität: 16.01.2015 DE 102015100639
(43) Veröffentlichungstag der Anmeldung: 22.11.2017
(73) Patentinhaber: Fritz Egger GmbH & Co. OG, 6380 St. Johann in Tirol (AT)
(72) Erfinder: GEYER, Andreas, 3500 Krems (AT)
(74) Vertreter: Cohausz & Florack
(86) Internationale Anmeldenummer: PCT/EP2016/050542
(87) Internationale Veröffentlichungsnummer: WO 2016/113290

(56) Entgegenhaltungen:
- EP-A1- 2 703 182
- EP-A2- 1 961 581
- EP-A2- 2 060 658
- WO-A1-2011/051116
- WO-A1-2012/019741
- DE-A1-102007 060 903
- US-A- 3 452 861

## Beschreibung

Die Erfindung betrifft ein Bauelement mit einem platten- oder profilförmigen Träger und einer mit dem Träger verbundenen dekorativen Oberflächenschicht, wobei der Träger aus Holzwerkstoff, einer HPL-Schichtstoffplatte und/oder Karton gebildet ist, und wobei die Oberflächenschicht aus hitzehärtbarem Harz gebildet ist und eine dreidimensionale, durch Prägen erzeugte Oberflächenstruktur aufweist, die unregelmäßig ausgebildet ist. Des Weiteren betrifft die Erfindung ein Verfahren zum Herstellen eines Bauelements, bei dem ein platten- oder profilförmiger Träger, der aus Holzwerkstoff, einer HPL-Schichtstoffplatte und/oder Karton gebildet ist, mit einer dekorativen Oberflächenschicht beschichtet wird, die Oberflächenschicht aus hitzehärtbarem Harz gebildet wird und in die Oberflächenschicht eine dreidimensionale, unregelmäßig ausgebildete Oberflächenstruktur eingeprägt wird.

Derartige Bauelemente sind bekannt. Sie werden unter anderem zu Möbelelementen, Arbeitsplatten, Wandpaneelen und ähnlichem weiterverarbeitet.

Insbesondere bei Möbeln wird es als störend empfunden, wenn deren Oberflächen sichtbare Fingerabdrücke aufweisen. Bekanntlich können auch saubere Hände Fingerabdrücke hinterlassen, da Fingerabdrücke normalerweise durch Handschweiß hervorgerufen werden.

In der DE 10 2008 034 825 A1 wird mit Bezug auf Holzwerkstoffplatten eine Ausrüstung für Lackoberflächen vorgeschlagen, welche die Neigung zur Verschmutzung von Lackoberflächen verringern und gleichzeitig einen Anti-Fingerabdruck-Effekt erzielen soll. Hierzu werden Decklacken vor deren Aufbringung auf die Oberflächen der zu lackierenden Gegenstände Silane zugegeben. Durch den Silanzusatz wird die Benetzbarkeit der ausgehärteten Lackoberfläche deutlich herabgesetzt und damit die Neigung zur Verschmutzung erheblich verringert.

Die WO 02/064382 A2 beschreibt Beschichtungszusammensetzungen für Fußboden- und Möbellaminate, die deren Beschichtung Anti-Verschmutzungseigenschaften verleihen sollen. Hierzu wird vorgeschlagen, die oberste Schutzschicht des Laminats, die hitzehärtbares Harz enthält, mit Material aus substituiertem Polysiloxan zu beschichten, oder solches Material in die oberste Schutzschicht des Laminats einzumischen.

Ferner beschreibt die EP 1 475 426 A1 ein Verfahren zur Herstellung von ablösbaren schmutz- und wasserabweisenden flächigen Beschichtungen auf Gegenständen, bei dem bei der Beschichtung hydrophobe Partikel auf die Oberfläche der Gegenstände aufgebracht werden und so eine Oberflächenstruktur mit Erhebungen auf der Oberfläche der Gegenstände erzeugt wird, die schmutz- und wasserabweisende Eigenschaften aufweist. Das Verfahren ist dadurch gekennzeichnet, dass die hydrophoben Partikel in einer Lösung eines Siliconwachses in einem leicht flüchtigen Siloxan suspendiert werden und diese Suspension auf zumindest eine Oberfläche des betreffenden Gegenstandes aufgebracht und das leicht flüchtige Siloxan anschließend entfernt wird.

Nachteilig bei den oben genannten Verfahren des Standes der Technik sind die erheblichen Materialkosten, die durch die Zugabe von Silanen, substituiertem Polysiloxan bzw. hydrophoben Partikeln mit Siliconwachs und leicht flüchtigem Siloxan verursacht werden. Zudem sind diese Zusatzmaterialien umweltbelastend und mitunter in gesundheitlicher Hinsicht bedenklich.

Die EP 1 961 581 A2 offenbart ein Tastenfeld für Drucktastenschalter, insbesondere für das Bedienfeld von Mobiltelefonen. Das Tastenblatt basiert auf einer Grundplatte, wobei auf die Oberseite der Platte eine transparente, hitzehärtbare Harzschicht aufgetragen ist. In der Harzschicht sind Unebenheiten ausgebildet, wobei die Vertiefungen der Unebenheiten im Abstand von 10 bis 500 µm parallel zueinander in einem "hairlinepattern" in der Harzschicht ausgeprägt sind. Die Tiefe der Unebenheiten ist mit 1 bis 200 µm, vorzugsweise 5 bis 30 µm, angegeben. Die Vertiefungen sind durch Spritzguss hergestellt oder alternativ durch Prägen erzeugt.

Davon ausgehend liegt der vorliegenden Erfindung die Aufgabe zugrunde, Bauelemente mit einer dekorativen Oberfläche kostengünstig zu schaffen, deren dekorative Oberfläche eine gute Verschleißfestigkeit aufweist und störende Fingerabdrücke weitgehend verhindert. Ferner soll ein Verfahren zur kostengünstigen Herstellung solcher Bauelemente angegeben werden.

Diese Aufgabe wird durch ein Bauelement bzw. Laminat mit den in Anspruch 1 angegebenen Merkmalen bzw. durch ein Verfahren mit den in Anspruch 7 angegebenen Merkmalen gelöst. Vorteilhafte Ausgestaltungen des erfindungsgemäßen Bauelements bzw. des erfindungsgemäßen Verfahrens sind in den Unteransprüchen angegeben.

Das erfindungsgemäße Bauelement bzw. Laminat ist aus einem platten- oder profilförmigen Träger und einer mit dem Träger verbundenen dekorativen Oberflächenschicht aufgebaut, wobei der Träger aus Holzwerkstoff, einer HPL-Schichtstoffplatte und/oder Karton gebildet ist, und wobei die Oberflächenschicht aus hitzehärtbarem Harz gebildet ist und eine dreidimensionale, durch Prägen erzeugte Oberflächenstruktur aufweist, die unregelmäßig ausgebildet ist. Erfindungsgemäß weist die Oberflächenstruktur abwechselnd geordnete und ungeordnete Bereiche auf, die durch eine Rippen- und/oder Rillenstruktur gebildet sind, wobei die geordneten Bereiche mit parallelen und/oder quasiparallelen Rippen und/oder parallelen und/oder quasiparallelen Rillen durch die ungeordneten Bereiche oder durch Strukturbrüche unterbrochen sind, und wobei die Breite der jeweiligen Rippe oder Rille im Bereich von 0,5 µm bis 100 µm, vorzugsweise im Bereich von 2 µm bis 50 µm liegt.

Das erfindungsgemäße Verfahren ist dementsprechend dadurch gekennzeichnet, dass zum Prägen der aus hitzehärtbarem Harz gebildeten Oberflächenschicht des Bauelements ein Prägewerkzeug verwendet wird, dessen Prägefläche abwechselnd geordnete und ungeordnete Bereiche aufweist, die durch eine Rippen- und/oder Rillenstruktur gebildet sind, wobei die geordneten Bereiche mit parallelen und/oder quasiparallelen Rippen und/oder parallelen und/oder quasiparallelen Rillen durch die ungeordneten Bereiche oder durch Strukturbrüche unterbrochen sind, und wobei die Breite der jeweiligen Rippe oder Rille im Bereich von 0,5 µm bis 100 µm, vorzugsweise im Bereich von 2 µm bis 50 µm liegt.

Die Rippen und/oder Rillen müssen dabei nicht völlig parallel zueinander in dem Sinne verlaufen, dass sich ihre Konturlinien oder diese berührende Tangenten in keinem Punkt schneiden. Vielmehr werden hier unter dem Ausdruck" quasiparallele Rippen und/oder Rillen" insbesondere auch solche Rippen und/oder Rillen verstanden, die nebeneinander liegen und zugleich einen im Wesentlichen gleichen Kurvenverlauf aufweisen. Bei den parallelen und/oder quasiparallelen Rippen und/oder Rillen kann es sich im Sinne der vorliegenden Erfindung insbesondere um unregelmäßig mäanderförmige Rippen und/oder Rillen handeln, die völlig parallel sind oder die nebeneinander liegen und zugleich einen im Wesentlichen gleichen Kurvenverlauf aufweisen.

Die Erfindung basiert auf der Idee, auf der aus hitzehärtbarem Harz (Kunstharz) gebildeten Oberflächenschicht unregelmäßige Feinstrukturen in Form von Linienstrukturen, deren Breite im Bereich von 0,5 µm bis 100 µm liegt, mittels eines entsprechend strukturierten Prägewerkzeuges, beispielsweise mittels eines oder mehrerer entsprechend strukturierter Pressbleche oder Pressbänder zu erzeugen, wobei die Feinstrukturen von Schrumpflackstrukturen abgeleitet sind, die durch unregelmäßig abwechselnde Bereiche von geordneteren und ungeordneteren Linienstrukturen gekennzeichnet sind. Die Linienstrukturen sind dabei beispielsweise als unregelmäßig mäanderförmige Rippen und/oder Rillen ausgebildet, wobei diese Linienstrukturen geordnetere Linienstrukturen in Form von im Wesentlichen konturkonform nebeneinander liegenden Rippen und/oder Rillen sowie ungeordnetere, also weniger bis gar nicht geordnete Linienstrukturen in Form von quer zueinander verlaufenden Rippen und/oder Rillen umfassen.

Gleichmaßen können bei der praktischen Ausführung der Erfindung gezielt erzeugte Strukturbilder Anwendung finden, die aus Algorithmen und/oder fraktalen und/oder replizierten Musterfolgen erzeugt sind oder werden, und die gleichen charakteristischen Strukturmerkmale wie Schrumpflachstrukturen aufweisen, d.h. eine Abfolge aus geordneten und ungeordneten Rillen und/oder Rippen bzw. Strukturbrüchen aufweisen.

Durch diese unregelmäßigen feinen Linienstrukturen mit geordneten bzw. geordneteren und weniger bis gar nicht geordneten Linienstrukturen wird ein signifikanter Anti-Fingerabdruck-Effekt erzielt. Gleichzeitig bewirken die Linienstrukturen durch ihre Feinheit einen relativ geringen Reflexionsgrad und damit eine matte Oberfläche. Der Reflexionsgrad (Glanzgrad) der erfindungsgemäß ausgebildeten Oberflächenschicht kann dabei durch die Strukturgeometrie und die Strukturgröße, insbesondere die Tiefe der Rillen variiert werden. Zudem verleiht das hitzehärtbare Harz (Kunstharz) der dekorativen Oberfläche eine gute Verschleißfestigkeit.

Das erfindungsgemäße Bauelement ist beispielsweise ein Möbelelement, Türelement, Wand-, Decken- oder Fußbodenpaneel oder Außenfassadenelement, oder für die Herstellung solcher Elemente oder Paneele bestimmt. Bei dem Möbelelement kann es sich insbesondere um eine Tischplatte, eine Arbeitsplatte, eine Schranktür, eine Schrankseitenwand, einen Einlegeboden, eine Schubladenfront, ein Regalbrett, eine Regalwange und dergleichen handeln.

Der platten- oder profilförmige Träger des erfindungsgemäßen Bauelements ist aus Holzwerkstoff, Schichtstoff und/oder Karton gebildet. Der Schichtstoff besteht dabei aus mehreren, in Phenolharz oder Melaminharz getränkten Papierschichten, die unter hohem Druck zusammengefügt sind. Solche aus Schichtstoff bestehenden Träger werden auch als HPL-Schichtstoffplatten bezeichnet. Bei dem aus Holzwerkstoff gebildeten Träger des erfindungsgemäßen Bauelements kann es sich um eine Span- oder Faserplatte, insbesondere eine HDF- oder MDF-Platte handeln. Auch kann es sich bei dem platten- oder profilförmigen Träger des erfindungsgemäßen Bauelements um eine sogenannte Sandwichplatte handeln, die einen aus einer Kartonwabenplatte oder Hartschaumplatte gebildeten Kern aufweisen.

Die mit dem Träger verbundene dekorative Oberflächenschicht kann ein oder mehrschichtig ausgeführt sein. Sie weist beispielsweise eine Dekorpapierschicht, ein auf den Träger direkt aufgedrucktes Dekor und/oder mindestens eine Lackschicht auf. Das Dekor der Dekorpapierschicht oder das direkt aufgedruckte Dekor ist beispielsweise ein Holzdekor, Steindekor, Fliesendekor oder Fantasiedekor. Insbesondere kann es sich bei dem Dekor auch um ein einheitlich einfarbiges Flächendekor handeln, wie etwa eine einfarbige, vollflächige Lackschicht oder eine einfarbige Dekorfolie.

Die dekorative Oberflächenschicht ist jeweils aus hitzehärtbarem Harz, vorzugsweise Melaminharz, Harnstoffharz oder einer Mischung solcher Harze gebildet, wobei das Harz zumindest auf der Außenseite der Oberflächenschicht angeordnet ist bzw. aufgebracht wird. Die dekorative Oberflächenschicht kann allerdings auch über ihre gesamte Schichtdicke hitzehärtbares Harz aufweisen oder daraus gebildet sein. Das hitzehärtbare Harz kann transparent, semitransparent oder undurchsichtig ausgeführt sein. Zudem kann das hitzehärtbare Harz auch ein- oder mehrfarbig ausgebildet sein.

Eine bevorzugte Ausgestaltung der Erfindung sieht vor, dass die jeweilige Rippe oder Rille der Oberflächenstruktur eine Höhe bzw. Tiefe von maximal 30 µm, vorzugsweise maximal 10 µm aufweist. Diese Ausgestaltung ist in hygienischer Hinsicht vorteilhaft, da sich bei entsprechend geringer Höhe bzw. Tiefe der linienförmigen Strukturelemente weniger Schmutz in der Oberflächenstruktur des Bauelements ansammeln kann. Beispielsweise weisen die Rippen und/oder Rillen der Oberflächenstruktur eine Höhe bzw. Tiefe im Bereich von 0,5 µm bis 15 µm, vorzugsweise im Bereich von 0,5 µm bis 10 µm, besonders bevorzugt im Bereich von 0,5 µm bis 8 µm auf.

Die Rückenlänge einzelner Rippen bzw. die Tallänge einzelner Rillen der Oberflächenstruktur liegt beispielsweise im Bereich von 10 µm bis 500 µm, bevorzugt im Bereich von 20 µm bis 200 µm.

Nach einer weiteren bevorzugten Ausgestaltung der Erfindung weisen die Rippen der Oberflächenstruktur rund ausgebildete Rippenrücken auf. Dadurch ist die Oberflächenschicht des erfindungsgemäßen Bauelements mechanisch robuster gegen sogenannte Aufglänzer sowie einfacher und rückstandsfreier von dem entsprechend strukturierten Prägewerkzeug, z.B. Pressblech oder Pressband entformbar. In diesem Zusammenhang ist es auch von Vorteil, wenn gemäß einer weiteren Ausgestaltung der Erfindung alle Hochpunkte der Rippen im Wesentlichen gleich hoch sind bzw. alle Tiefpunkte (Täler) der Rillen im Wesentlichen gleich tief sind.

Die strukturierte Prägefläche des Prägewerkzeugs kann relativ kostengünstig durch Lasergravieren erzeugt werden, wobei die Rillen direkt in eine metallische Werkzeugfläche eingebrannt werden und die Werkzeugfläche nach dem Einbrennen der Rillen verchromt wird. Ein Ätzen der Werkzeugoberfläche zum Erzeugen der erforderlichen Strukturen ist dabei nicht notwendig.

Alternativ kann die Prägefläche durch Lasergravieren auch in der Weise erzeugt werden, dass die Rillen in eine verchromte metallische Werkzeugfläche eingebrannt werden. Als Ausgangsmaterial kann dabei eine vorpolierte und ausreichend dick verchromte Werkzeugfläche eines geeigneten Blechs bzw. Walzenkörpers verwendet werden. Nach dem Lasergravieren ist dann keine weitere Bearbeitung beim Pressblech- bzw. Presswalzenhersteller, d.h. kein nachfolgender Verchromungsschritt erforderlich.

Eine weitere Variante zur Herstellung eines geeigneten Prägewerkzeuges zur Erzeugung erfindungsgemäßer Oberflächenstrukturen in einer hitzehärtbaren Harzschicht ist dadurch gekennzeichnet, dass die Prägefläche des Werkzeugs durch selektives Wegbrennen eines vollflächig auf eine Werkzeugfläche aufgebrachten Ätzlackes erzeugt wird, wobei eine so erzeugte Ätzmaske anschließend einem Ätzprozess unterworfen wird, um die Rillen mit einer gewünschten Tiefe zu erzeugen. Bei dieser Variante kann zum selektiven Wegbrennen des Ätzlackes ein niedrigenergischer Laser verwendet werden. Die Möglichkeit der Nutzung eines niedrigenergischen Lasers bietet in anlagentechnischer Hinsicht Kostenvorteile.

Nachfolgend wird die Erfindung unter Bezugnahme auf die beigefügte Zeichnung anhand mehrerer Ausführungsbeispiele weiter erläutert. Es zeigen:
- Fig. 1 bis 3: Bilder von Abschnitten einer Oberflächenstruktur eines erfindungsgemäßen Bauteils, die mit einem Rasterkraftmikroskop bei verschiedenen Vergrößerungsmaßstäben aufgenommen wurden;
- Fig. 4 und 5: zwei Beispiele von Strukturbildern, die unter Anwendung von Algorithmen erzeugt wurden;
- Fig. 6: ein Beispiel eines technisch erzeugten Strukturbildes, das von einer Schrumpflackstruktur abgeleitet ist;
- Fig. 7: ein Beispiel eines von einer Schrumpflackstruktur abgeleiteten, zufälligen Strukturbildes, das mittels eines Lasers erzeugt wurde; und
- Fig. 8 bis 11: weitere Beispiele von technisch erzeugten Strukturbildern, die jeweils von einer Schrumpflackstruktur abgeleitet sind.

Die Rasterkraftmikroskopie (Atomic Force Microscopy, AFM) ist eine oberflächensensitive Technik zur Abbildung der Struktur und Morphologie bzw. Topographie der Oberfläche einer Probe. Dabei werden die Oberflächen der zu untersuchenden Proben mit einer Messnadel abgerastert und die Wechselwirkung zwischen der Nadel und der Probenoberfläche aufgezeichnet. Die Messnadel, auch Cantilever genannt, weist einen federelastischen Abschnitt auf, der als Reflexionsfläche für einen Laserstrahl dient. Der Laserstrahl wird dabei je nach elastischer Verbiegung des Cantilevers in unterschiedlichen Winkeln abgelenkt und der reflektierte, abgelenkte Laserstrahl von einem Photodetektor erfasst. Die elastische Verbiegung des Cantilevers und damit die Ablenkung des Laserstrahls sind vom Höhenprofil der Probenoberfläche abhängig. Beim Abrastern der Probenoberfläche wird jedem Punkt in der xy-Ebene je nach Stärke der Ablenkung des Laserstrahls ein Helligkeitswert zugeordnet und so am Bildschirm des Rasterkraftmikroskops ein Bild des Oberflächenprofils der Probe erzeugt. Die Bewegung des Cantilevers in der z-Richtung (Abstand zur Oberfläche) wird dabei ebenfalls detektiert.

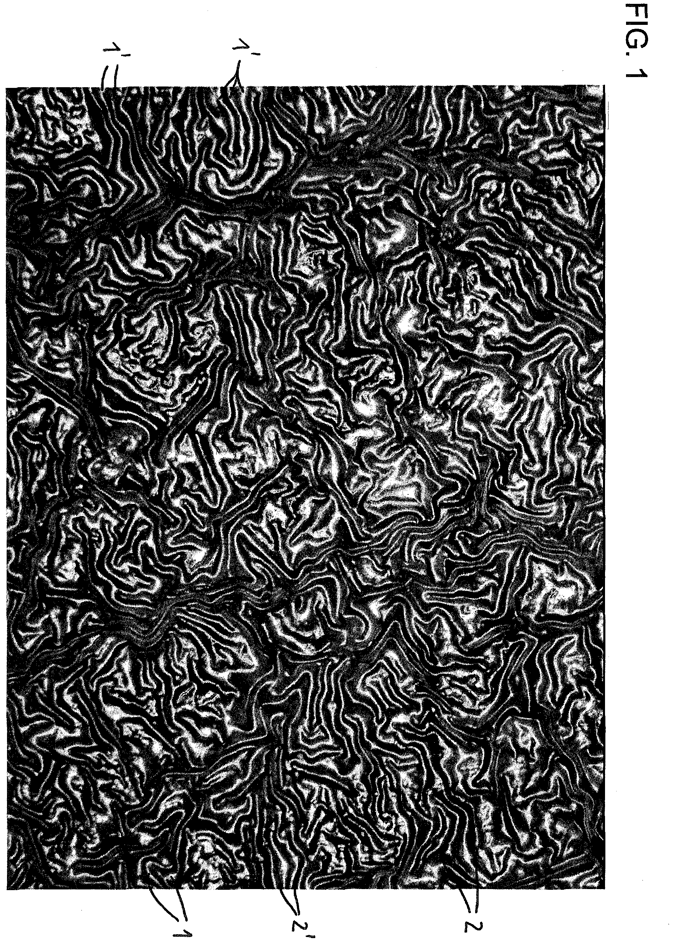

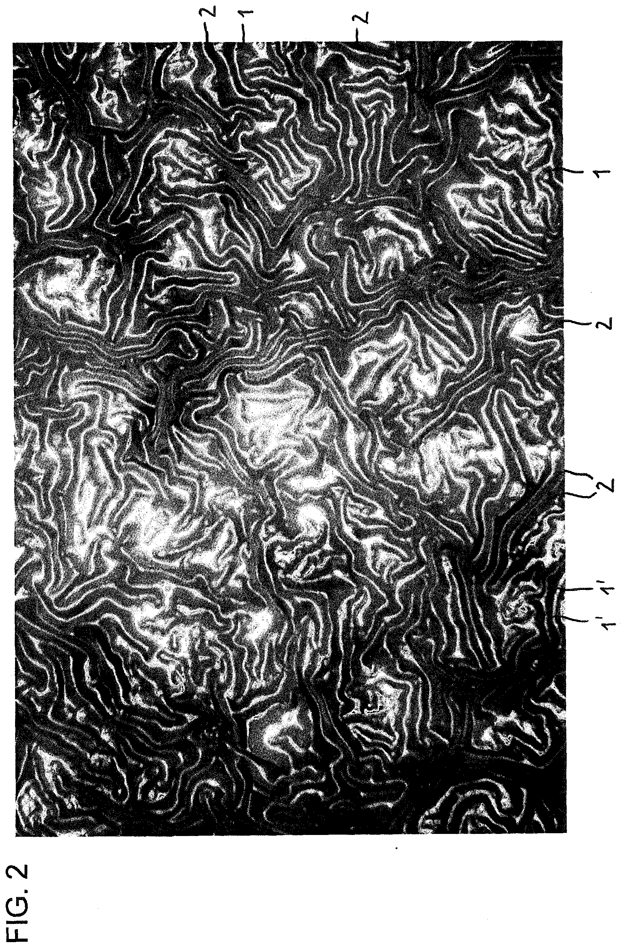

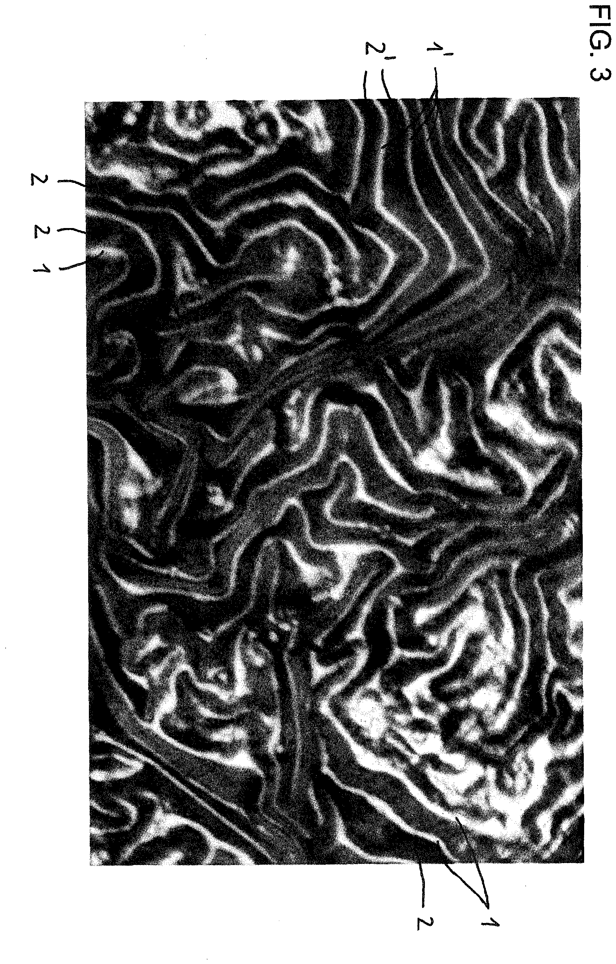

Die Figuren 1 bis 3 zeigen unterschiedlich vergrößerte Bilder von Oberflächenabschnitten einer mit einem Rasterkraftmikroskop untersuchten Probe eines erfindungsgemäßen Bauelements. Das Bauelement, bei dem es sich beispielsweise um eine Möbelplatte oder ein Wandpaneel handelt, weist einen plattenförmigen Träger auf, der ein- oder beidseitig mit eine dekorativen Oberflächenschicht beschichtet ist. Der Träger und die dekorative Oberflächenschicht sind miteinander stoffschlüssig verbunden. Die dekorative Oberflächenschicht ist aus hitzehärtbarem Harz, vorzugsweise Melaminharz und/oder Harnstoffharz gebildet, wobei das Harz zumindest an der Oberseite der dekorativen Oberflächenschicht vorgesehen ist.

In die Oberflächenschicht bzw. Harzschicht ist mittels eines strukturierten Prägewerkzeugs, zum Beispiel eines strukturierten Pressblechs oder Pressbandes, eine dreidimensionale, unregelmäßig ausgebildete Oberflächenstruktur eingeprägt.

In den Figuren (Bildern) 1 bis 3 ist zu erkennen, dass die Oberflächenstruktur unregelmäßig mäanderförmige Rippen 1 und Rillen 2 aufweist, die teilweise quer zueinander verlaufen und teilweise im Wesentlichen konturkonform nebeneinander liegen. Die quer zueinander verlaufenden Rippen und/oder Rillen schließen miteinander verschieden große Winkel ein, die insbesondere im Bereich von 30° bis 150° liegen. Die konturkonform nebeneinander liegenden Rippen 1' und/oder Rillen 2' weisen einen im Wesentlichen gleichen Kurvenverlauf auf.

Die Rippen 1, 1' und Rillen 2, 2' sind sehr fein, insbesondere sehr schmal ausgebildet. Die Breite der jeweiligen Rippe 1, 1' oder Rille 2, 2' liegt im Bereich von 0,5 µm bis 100 µm, vorzugsweise im Bereich von 2 µm bis 50 µm. Die Höhe oder Tiefe der Rippen 1, 1' bzw. Rillen 2, 2' liegt im Bereich von 0,5 µm bis 15 µm, vorzugsweise im Bereich von 0,5 µm bis 10 µm, besonders bevorzugt im Bereich von 0,5 µm bis 8 µm. Die Rückenlänge einzelner mäanderförmiger Rippen 1, 1' bzw. die Tallänge einzelner mäanderförmiger Rillen 2, 2' der Oberflächenstruktur liegt beispielsweise im Bereich von 10 µm bis 500 µm, insbesondere im Bereich von 20 µm bis 200 µm.

Die unterschiedlichen Strukturbereiche (Struktureinheiten) der Oberfläche bewirken unterschiedliche Brechungsindizes bzw. Reflektionsgrade und damit den Effekt der zumindest teilweisen Nichtsichtbarkeit von Fingerabdrücken. Die Variation der Feinheit dieser Oberflächenstrukturen bestimmt zum einen den Mattierungsgrad und zum anderen in Verbindung mit der gewählten Strukturierungsart die Antifingerabdruck-Eigenschaften. Je feiner die dreidimensionale Oberflächenstruktur in Form von Rippen und/oder Rillen in den oben genannten Bereichen ist, desto geringer ist der Glanzgrad der Oberfläche. Je gröber diese Oberflächenstruktur in den oben genannten Bereichen ist, desto besser sind die Antifingerabdruck-Eigenschaften.

Die Rippenrücken der Rippen 1, 1' sind im Querschnitt betrachtet gut gerundet ausgebildet. Die Rippen 1, 1' weisen beispielsweise eine im Wesentlichen parabelförmige oder im Wesentlichen halbkreisförmige Querschnittskontur auf. Entsprechendes gilt vorzugsweise auch für die Querschnittkontur der Rillen 2, 2'.

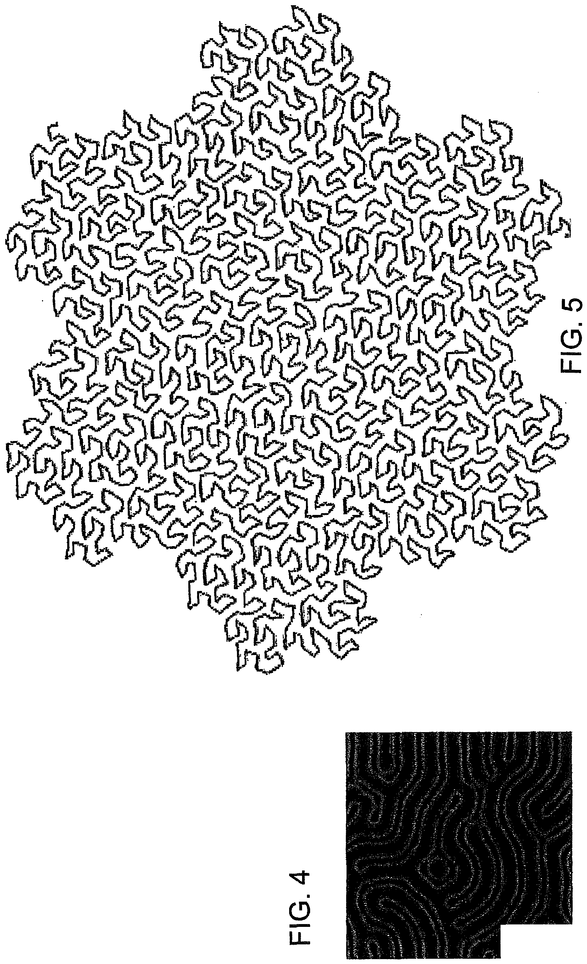

Zur Herstellung von Bauelementen mit einer dekorativen Oberfläche, deren dekorative Oberfläche eine gute Verschleißfestigkeit aufweist und störende Fingerabdrücke weitgehend verhindert, sieht die Erfindung somit vor, dass die Strukturcharakteristika einer Schrumpflackoberfläche, also eine Abfolge aus geordneteren und ungeordneteren Strukturelementen im Mikrometerbereich, in eine Oberflächenschicht aus hitzehärtbarem Harz eingeprägt bzw. eingepresst wird. Hierzu können vorzugsweise auch technisch gezielt erzeugte Strukturbilder Anwendung finden, indem das Strukturbild in die Oberfläche eines Prägewerkzeugs, beispielsweise eines Pressblechs, eingearbeitet bzw. als Vorlage bei der Herstellung der Werkzeugoberfläche (Prägefläche) verwendet wird. Als gezielt erzeugte Strukturbilder können dabei insbesondere solche Strukturbilder Anwendung finden, die mittels eines Algorithmus und/oder aus fraktalen und/oder replizierten Musterfolgen erzeugt werden. In den Figuren 4 bis 11 sind diesbezüglich mehrere Beispiele gezeigt.

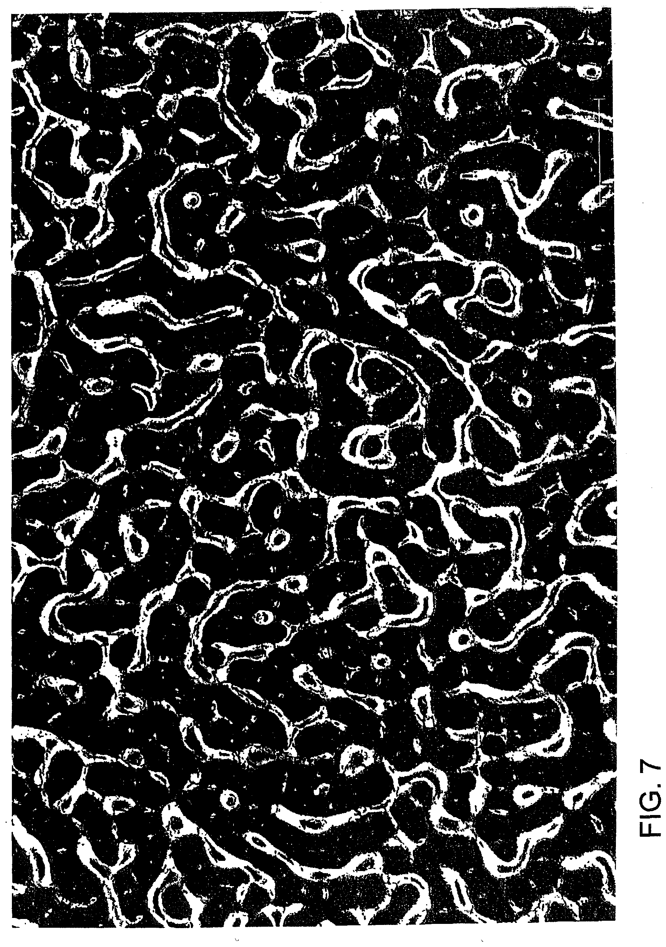

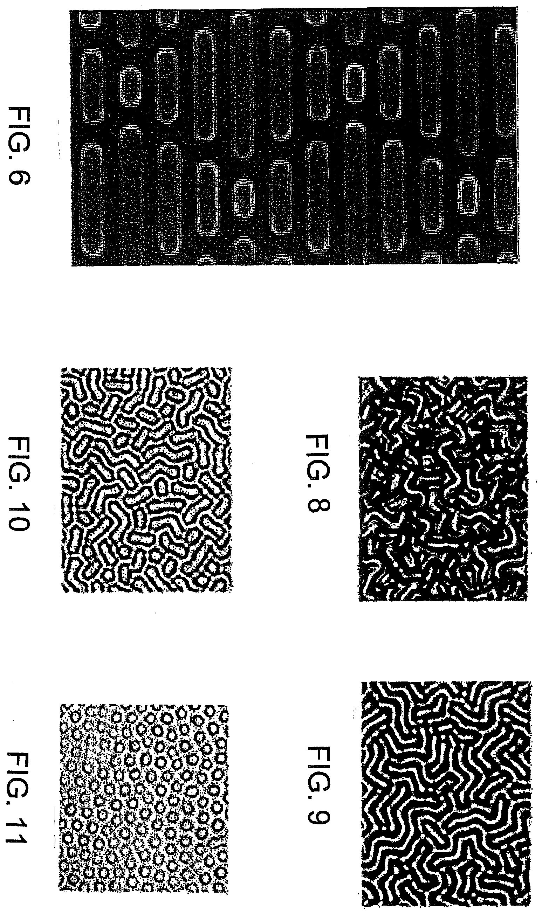

Die Fig. 4 zeigt ein mittels einer oder mehrerer Differentialgleichungen generiertes Strukturbild, während Fig. 5 einen auf einer Vektorgraphik basierenden frakturierten Strukturansatz veranschaulicht. Fig. 6. zeigt einen technisch einfachen Wechsel geordneter und ungeordneter Strukturelemente bzw. Strukturen, wobei die ungeordneten Strukturelemente (Strukturen) einen Strukturbruch (Unterbrechung) definieren. Fig. 7 zeigt ein Bild einer mittels eines Laserstrahls erzeugten Zufallsmusters mit geordneteren und ungeordneteren Strukturelementen in Form von Rillen bzw. Rippen.

Die Figuren 8 bis 11 zeigen von Schrumpflackstrukturen abgeleitete Muster, die ähnliche Charakteristika wie Schrumpflackstrukturen haben, nämlich eine Abfolge aus (mehr) geordneten bzw. geordneteren und ungeordneten bzw. weniger geordneten Strukturelementen, wobei Fig. 8 wiederum eine Zufallsstruktur, Fig. 9 eine lamellen- oder streifenförmige Struktur mit einer Vielzahl streifenförmiger Strukturelemente, Fig. 10 eine "Erdnuss"-Struktur mit einer Vielzahl erdnussförmiger Strukturelemente, und Fig. 11 eine Struktur mit einer Vielzahl hexagonaler Strukturelemente zeigt.

Ein zur Erzeugung eines der in den Figuren 1 bis 11 dargestellten Strukturbilder bzw. einer entsprechenden Oberflächenstruktur geeignetes Prägewerkzeug, beispielsweise ein strukturiertes Pressblech oder eine strukturierte Presswalze, kann durch Laserbearbeitung (Lasergravieren) der Werkzeugoberfläche (Prägefläche) hergestellt werden.

Eine Ausgestaltung des Lasergravierens einer metallischen Werkzeugoberfläche zum Erzeugen erfindungsgemäßer Oberflächenstrukturen in Oberflächenschichten aus hitzehärtbarem Harz, insbesondere Melaminharz, ist dadurch gekennzeichnet, dass die hierzu erforderlichen Rillen bzw. Strukturen direkt in die metallische Werkzeugfläche, die vorzugsweise aus Stahl hergestellt ist, eingebrannt werden und die Werkzeugfläche nach dem Einbrennen der Rillen bzw. Strukturen verchromt wird. Ein Ätzen der Werkzeugoberfläche zum Erzeugen der Rillen (Strukturen) ist in diesem Fall nicht notwendig. Die durch das direkte Lasergravieren strukturieren Pressbleche oder Presswalzen sind nach einem abschließenden Verchromungsschritt sofort einsetzbar. Dabei braucht kein Mattchrom zur Reduzierung des Glanzgrades der Prägeflächen der Pressflächen bzw. Presswalzen verwendet zu werden.

Eine andere Möglichkeit, Pressbleche oder Presswalzen mit den erforderlichen Feinstrukturen zum Erzeugen erfindungsgemäßer Oberflächenstrukturen in hitzehärtbaren Harzschichten herzustellen, besteht darin, die Prägefläche durch Lasergravieren zu erzeugen, wobei die Rillen in eine verchromte metallische Werkzeugfläche eingebrannt werden. In diesem Fall wäre kein nachfolgender Verchromungsschritt notwendig. Als Ausgangsmaterial könnte dabei ein vorpoliertes und ausreichend dick verchromtes Metallblech, vorzugsweise Stahlblech verwendet werden, in das durch Lasergravieren die erforderlichen Feinstrukturen eingebrannt werden.

Eine weitere Variante, um Pressbleche oder Presswalzen mit den erforderlichen Feinstrukturen zum Erzeugen erfindungsgemäßer Oberflächenstrukturen in hitzehärtbaren Harzschichten herzustellen, besteht darin, diese Feinstrukturen durch gezieltes selektives Wegbrennen eines vollflächig auf die Blechfläche oder Walzenmantelfläche aufgebrachten Ätzlackes mittels mindestens eines niedrigenergetischen Lasers zu erzeugen. Die so erzeugte Ätzmaske wird dann anschließend einem Ätzprozess unterworfen, um die erforderlichen Rillen in dem Pressblech bzw. in der Walzenmantelfläche mit der gewünschten Tiefe zu erzeugen.

Die Ausführung der vorliegenden Erfindung ist nicht auf das in der Zeichnung dargestellte Ausführungsbeispiel beschränkt. Vielmehr sind zahlreiche Varianten denkbar, die auch bei von dem Bespiel abweichender Gestaltung von der in den beigefügten Ansprüchen umschriebenen Erfindung Gebrauch machen.

## Patentansprüche

1. Bauelement mit einem platten- oder profilförmigen Träger und einer mit dem Träger verbundenen dekorativen Oberflächenschicht, wobei der Träger aus Holzwerkstoff, einer HPL-Schichtstoffplatte und/oder Karton gebildet ist, und wobei die Oberflächenschicht aus hitzehärtbarem Harz gebildet ist und eine dreidimensionale, durch Prägen erzeugte Oberflächenstruktur aufweist, die unregelmäßig ausgebildet ist, **dadurch gekennzeichnet, dass** die Oberflächenstruktur abwechselnd geordnete und ungeordnete Bereiche aufweist, die durch eine Rippen- und/oder Rillenstruktur gebildet sind, wobei die geordneten Bereiche mit parallelen und/oder quasiparallelen Rippen und/oder parallelen und/oder quasiparallelen Rillen durch die ungeordneten Bereiche oder durch Strukturbrüche unterbrochen sind, und wobei die Breite der jeweiligen Rippe oder Rille im Bereich von 0,5 µm bis 100 µm liegt.

2. Bauelement nach Anspruch 1, **dadurch gekennzeichnet, dass** die Breite der jeweiligen Rippe oder Rille im Bereich von 2 µm bis 50 µm liegt.

3. Bauelement nach Anspruch 1 oder 2, **dadurch gekennzeichnet, dass** die jeweilige Rippe eine Höhe von maximal 15 µm, vorzugsweise maximal 10 µm aufweist.

4. Bauelement nach einem der Ansprüche 1 bis 3, **dadurch gekennzeichnet, dass** die jeweilige Rille eine Tiefe von maximal 15 µm, vorzugsweise maximal 10 µm aufweist.

5. Bauelement nach einem der Ansprüche 1 bis 4, **dadurch gekennzeichnet, dass** die Rippen rund ausgebildete Rippenrücken aufweisen.

6. Bauelement nach einem der Ansprüche 1 bis 5, **dadurch gekennzeichnet, dass** die Oberflächenschicht aus Melaminharz, Harnstoffharz oder einer Mischung solcher Harze gebildet ist.

7. Verfahren zum Herstellen eines Bauelements, bei dem ein platten- oder profilförmiger Träger, der aus Holzwerkstoff, einer HPL-Schichtstoffplatte und/oder Karton gebildet ist, mit einer dekorativen Oberflächenschicht beschichtet wird, die Oberflächenschicht aus hitzehärtbarem Harz gebildet wird und in die Oberflächenschicht eine dreidimensionale, unregelmäßig ausgebildete Oberflächenstruktur eingeprägt wird, **dadurch gekennzeichnet, dass** zum Prägen der Oberflächenschicht ein Prägewerkzeug verwendet wird, dessen Prägefläche abwechselnd geordnete und ungeordnete Bereiche aufweist, die durch eine Rippen- und/oder Rillenstruktur gebildet sind, wobei die geordneten Bereiche mit parallelen und/oder quasiparallelen Rippen und/oder parallelen und/oder quasiparallelen Rillen durch die ungeordneten Bereiche oder durch Strukturbrüche unterbrochen sind, und wobei die Breite der jeweiligen Rippe oder Rille im Bereich von 0,5 µm bis 100 µm liegt.

8. Verfahren nach Anspruch 7, **dadurch gekennzeichnet, dass** die Breite der jeweiligen Rippe oder Rille im Bereich von 2 µm bis 50 µm liegt.

9. Verfahren nach Anspruch 7 oder 8, **dadurch gekennzeichnet, dass** die jeweilige Rippe eine Höhe von maximal 15 µm, vorzugsweise maximal 10 µm aufweist.

10. Verfahren nach einem der Ansprüche 7 bis 9, **dadurch gekennzeichnet, dass** die jeweilige Rille eine Tiefe von maximal 15 µm, vorzugsweise maximal 10 µm aufweist.

11. Verfahren nach einem der Ansprüche 7 bis 10, **dadurch gekennzeichnet, dass** die Rippen rund ausgebildete Rippenrücken aufweisen.

12. Verfahren nach einem der Ansprüche 7 bis 11, **dadurch gekennzeichnet, dass** die Oberflächenschicht aus Melaminharz, Harnstoffharz oder einer Mischung solcher Harze gebildet wird.

13. Verfahren nach einem der Ansprüche 7 bis 12, **dadurch gekennzeichnet, dass** die Prägefläche durch Lasergravieren erzeugt wird, wobei die Rillen in eine metallische Werkzeugfläche eingebrannt werden und die Werkzeugfläche nach dem Einbrennen der Rillen verchromt wird.

14. Verfahren nach einem der Ansprüche 7 bis 12, **dadurch gekennzeichnet, dass** die Prägefläche durch Lasergravieren erzeugt wird, wobei die Rillen in eine verchromte metallische Werkzeugfläche eingebrannt werden.

15. Verfahren nach einem der Ansprüche 7 bis 12, **dadurch gekennzeichnet, dass** die Prägefläche durch selektives Wegbrennen eines vollflächig auf eine Werkzeugfläche aufgebrachten Ätzlackes erzeugt wird, wobei eine so erzeugte Ätzmaske anschließend einem Ätzprozess unterworfen wird, um die Rillen mit einer gewünschten Tiefe zu erzeugen.

## Claims

1. Component having a plate-shaped or profile-shaped support and a decorative surface layer connected to the support, whereby the support being formed of wood material, a high pressure laminate (HPL) and/or cardboard and the surface layer being formed of thermally curable resin and comprising a three-dimensional surface structure that is produced by embossing and is irregular, **characterised in that** the surface structure comprises regions that are alternately ordered and non-ordered and that are formed by a ribbed and/or grooved texture, the ordered regions having parallel and/or quasi-parallel ribs and/or parallel and/or quasi-parallel grooves being interrupted by the non-ordered regions or by structural breaks, and the width of the respective rib or groove being in the range of from 0.5 µm to 100 µm.

2. Component according to claim 1, **characterised in that** the width of the respective rib or groove is in the range of from 2 µm to 50 µm.

3. Component according to either claim 1 or claim 2, **characterised in that** the respective rib has a height of at most 15 µm, preferably at most 10 µm.

4. Component according to any of claims 1 to 3, **characterised in that** the respective groove has a depth of at most 15 µm, preferably at most 10 µm.

5. Component according to any of claims 1 to 4, **characterised in that** the ribs comprise round rib ridges.

6. Component according to any of claims 1 to 5, **characterised in that** the surface layer is formed of melamine resin, urea resin or a mixture of such resins.

7. Method for manufacturing a component in which a plate-shaped or profile-shaped support, whereby the support is formed of wood material, a high pressure laminate (HPL) and/or cardboard and is coated with a decorative surface layer, the surface layer is formed of a thermally curable resin and a three-dimensional, irregular surface structure is embossed into the surface layer, **characterised in that** an embossing tool is used to emboss the surface layer, of which embossing tool the embossing surface comprises regions that are alternately ordered and non-ordered and that are formed by a ribbed and/or grooved structure, the ordered regions having parallel and/or quasi-parallel ribs and/or parallel and/or quasi-parallel grooves being interrupted by the non-ordered regions or by structural breaks, and the width of the respective rib or groove being in the range of from 0.5 µm to 100 µm.

8. Method according to claim 7, **characterised in that** the width of the respective rib or groove is in the range of from 2 µm to 50 µm.

9. Method according to either claim 7 or claim 8, **characterised in that** the respective rib has a height of at most 15 µm, preferably at most 10 µm.

10. Method according to any of claims 7 to 9, **characterised in that** the respective groove has a depth of at most 15 µm, preferably at most 10 µm.

11. Method according to any of claims 7 to 10, **characterised in that** the ribs comprise round rib ridges.

12. Method according to any of claims 7 to 11, **characterised in that** the surface layer is formed of melamine resin, urea resin or a mixture of such resins.

13. Method according to any of claims 7 to 12, **characterised in that** the embossing surface is produced by laser engraving, the grooves being burnt into a metal tool surface and the tool surface being chrome-plated after the grooves have been burnt in.

14. Method according to any of claims 7 to 12, **characterised in that** the embossing surface is produced by laser engraving, the grooves being burnt into a chrome-plated metal tool surface.

15. Method according to any of claims 7 to 12, **characterised in that** the embossing surface is produced by selectively burning away an etching paint applied all over a tool surface, an etching mask thus produced then being subjected to an etching process in order to produce the grooves having a desired depth.

## Revendications

1. Élément ayant un support en forme de plaque ou de profilée et une couche superficielle décorative reliée au support, le support étant fabriqué en un matériau en bois, en une plaque stratifiée HPL et/ou en carton, la couche superficielle étant fabriquée en une résine thermodurcissable et présentant une structure superficielle en trois dimensions obtenue par gaufrage qui est formée de manière irrégulière, **caractérisé en ce que** la structure superficielle présente une alternance de zones ordonnées et de zones désordonnées constituées par une structure de nervures et/ou de sillons, les zones ordonnées incluant des nervures parallèles et/ou quasi parallèles et/ou les sillons parallèles et/ou quasi parallèles étant interrompus par des zones désordonnées ou des interruptions de structure, et la largeur de chaque nervure ou de chaque sillon étant comprise entre 0,5 et 100 µm.

2. Élément selon la revendication 1, **caractérisé en ce que** la largeur de chaque nervure ou de chaque sillon est comprise entre 2 µm et 50 µm.

3. Élément selon la revendication 1 ou 2, **caractérisé en ce que** chaque nervure présente une hauteur étant au maximum de 15 µm, de préférence étant au maximum de 10 µm.

4. Élément selon l'une des revendications 1 à 3, **caractérisé en ce que** chaque rainure présente une profondeur étant au maximum de 15 µm, de préférence étant au maximum de 10 µm.

5. Élément selon l'une des revendications 1 à 4, **caractérisé en ce que** les nervures présentent des dos de nervure de conception ronde.

6. Élément selon l'une des revendications 1 à 5, **caractérisé en ce que** la couche superficielle est fabriquée en une résine mélamine, en une résine d'urée ou en un mélange de telles résines.

7. Procédé de fabrication d'un élément, dans lequel un support en forme de plaque ou de profilée, lequel est fabriqué en un matériau en bois, en une plaque stratifiée HPL et/ou en carton, est revêtu d'une couche superficielle décorative, la couche superficielle étant fabriquée en une résine thermodurcissable et une structure superficielle en trois dimensions, formée de manière irrégulière, est gaufrée dans la couche superficielle, **caractérisé en ce que** l'on utilise, pour le gaufrage de la couche superficielle, un outil de gaufrage, dont la surface de gaufrage présente une alternance de zones ordonnées et de zones désordonnées constituées par une structure de nervures ou de sillons, les zones ordonnées incluant des nervures parallèles et/ou quasi parallèles et/ou des sillons parallèles et/ou quasi parallèles étant interrompus par des zones désordonnées ou des interruptions de structure, et la largeur de chaque nervure ou de chaque sillon étant comprise entre 0,5 µm et 100 µm.

8. Procédé selon la revendication 7, **caractérisé en ce que** la largeur de chaque nervure ou de chaque sillon est comprise entre 2 µm et 50 µm.

9. Procédé selon la revendication 7 ou 8, **caractérisé en ce que** chaque nervure présente une hauteur étant au maximum de 15 µm, de préférence étant au maximum de 10 µm.

10. Procédé selon l'une des revendications 7 à 9, **caractérisé en ce que** chaque rainure présente une profondeur étant au maximum de 15 µm, de préférence étant au maximum de 10 µm.

11. Procédé selon l'une des revendications 7 à 10, **caractérisé en ce que** les nervures présentent des dos de nervure de conception ronde.

12. Procédé selon l'une des revendications 7 à 11, **caractérisé en ce que** la couche superficielle est fabriquée en une résine mélamine, en une résine d'urée ou en un mélange de telles résines.

13. Procédé selon l'une des revendications 7 à 12, **caractérisé en ce que** la surface de gaufrage est obtenue par gravure au laser, les rainures pouvant être cuites dans une surface d'outil métallique et la surface de l'outil étant chromée après cuisson de la rainure.

14. Procédé selon l'une des revendications 7 à 12, **caractérisé en ce que** la surface de gaufrage est obtenue par gravure au laser, les rainures étant cuites dans une surface d'outil métallique chromée.

15. Procédé selon l'une des revendications 7 à 12, **caractérisé en ce que** la surface de gaufrage est obtenue par cuisson sélective d'un vernis de gravure appliqué sur toute la surface d'une surface d'outil, un masque de gravure ainsi obtenu étant soumis ensuite à un processus de gravure afin d'obtenir des rainures ayant la profondeur souhaitée.
